## Europäisches Patentamt
## European Patent Office
## Office européen des brevets

(19)

(11) Numéro de publication: **0 019 303 B1**

(12) **FASCICULE DE BREVET EUROPEEN**

(45) Date de publication du fascicule du brevet:
14.08.85

(51) Int. Cl.⁴: **F 25 J 3/02,** G 21 F 9/02,
**B 01 D 3/42**

(21) Numéro de dépôt: **80200040.6**

(22) Date de dépôt: **16.01.80**

(54) **Procédé d'extraction de xénon et/ou de krypton d'un gaz porteur.**

(30) Priorité: **04.05.79 LU 81226**

(43) Date de publication de la demande:
**26.11.80 Bulletin 80/24**

(45) Mention de la délivrance du brevet:
**14.08.85 Bulletin 85/33**

(84) Etats contractants désignés:
**AT BE CH DE FR GB IT NL SE**

(56) Documents cités:
**FR - A - 1 177 743**
**FR - A - 1 242 066**
**FR - A - 2 124 613**
**FR - A - 2 280 954**
**GB - A - 1 213 095**
**US - A - 3 766 713**
**US - A - 3 830 698**
**US - A - 4 045 191**

(73) Titulaire: **"Centre d'Etude de l'Energie Nucléaire",
"C.E.N.", Avenue Plasky 144, Schaerbeek
B-1040 Bruxelles (BE)**

(72) Inventeur: **Collard, Guy, Eugène, avenue de la
Basilique, 345, Bruxelles (BE)**
Inventeur: **Vaesen, Petrus Jacobus, Abelenstraat 31,
Hassels (BE)**
Inventeur: **Stevens, Jozef, Greessebaan 20,
Balen-Huisen (BE)**

(74) Mandataire: **Pirson, Jean et al, c/o Bureau Gevers, S.A.
rue de Livourne, 7 bte 1, B-1050 Brussels (BE)**

## Description

La présente invention est relative à un procédé d'extraction de xénon et/ou de krypton d'un gaz porteur, tel que définie dans le préambule de la revendication 1.

Le procédé décrit dans le document GB-A-1 213 095 présente l'inconvénient que des problèmes de désublimation ou de solidification dans la tour de distillation peuvent se produire si le rapport krypton/xénon dans la charge est relativement bas.

Le procédé faisant l'objet du document US-A-4 045 191 présente sensiblement les mêmes inconvénients que celui du document GB-A-1 213 095 et de plus, ne permet pas d'obtenir un mélange pur de krypton et de xénon.

Un des buts essentiels de la présente invention est de remédier aux inconvéniants précités et de présenter un procédé permettant d'extraire, à des conditions économiquement justifiées, du xénon, du krypton ou un mélange des deux, d'un gaz porteur dans un état très pur et ceci à partir de charges dans lesquelles la teneur en krypton par rapport au xénon varie entre des limites relativement étendues, et peut p.c. être de l'ordre de $\frac{1}{20}$, sans aucun risque de désublimation ou de solidification dans la tour de distillation.

De plus, l'invention présente un procédé de conduite de la colonne de rectification qui permet d'éviter une accumulation dans le bouilleur ou chaudière de produits d'une volatilité supérieure à celle du krypton et pouvant constituer un danger d'explosion, tels que méthane et oxygène. Surtout l'oxygène est particulièrement dangereux en présence de l'isotope 85 du krypton dont le champ d'irradiation peut provoquer la formation d'ozone.

A cet effet, suivant l'invention, on introduit ladite charge (F), dont la concentration en krypton et en xénon dans le gaz porteur est inférieure respectivement à $1.10^{-2}$ et $2.10^{-3}$ mole/mole de gaz porteur et dans laquelle les concentrations relatives en xénon par rapport au krypton sont comprises dans la gamme de 0 à 50 mole/mole de gaz porteur, dans la colonne (R) à une température sensiblement constante de tout au plus 5° K supérieure à la température provoquant la désublimation d'un de ses composants à sa pression partielle nominale et à ce qu'on contrôle dans cette colonne le niveau de la zone de séparation (s) de l'élément le plus volatil à extraire, tel que le krypton, et du composant le moins volatil du gaz porteur en agissant sur le rapport momentané de la quantité de calories et de la quantité de frigories introduites dans la colonne, de manière à maintenir cette zone de séparation (s), d'une part, au-dessus d'une zone tampon (t) de l'élément le plus volatil à extraire, tel que le krypton, et, d'autre part, en dessous d'une zone d'équilibre (e) entre les phases liquide et gazeuse située elle-même en dessous du niveau de la colonne où a lieu l'introduction de la charge susdite, le débit de liquide descendant dans la zone située en dessous de ce niveau, appelée zone d'enrichissement (E), comprenant les zones d'équilibre (e), de séparation (s) et tampon (t), étant réglé en fonction de la pression de la colonne de manière à éviter la formation d'une phase solide dans cette zone d'enrichissement (E), le niveau de la charge (F) étant réglé en fonction de la pression de la colonne, d'une manière connue en soi, en vue d'éviter la formation d'une phase solide dans cette zone d'enrichissement.

Avantageusement, on agit sur le rapport momentané de la quantité de la calories et de la quantité de frigories introduites dans la colonne en faisant varier le refroidissement au sommet de la colonne.

Suivant une forme de réalisation particulière, on agit sur le refroidissement de la colonne en prévoyant un courant de fluide réfrigérant assurant le refroidissement du sommet de la colonne, constitué de deux parties, le débit de la première partie ayant un point de consigne qui varie linéairement avec le débit de la charge et qui a une valeur légèrement inférieure à celle correspondant à la somme des pertes frigorifiques et de la puissance de chauffe au bouilleur de la colonne lorsque le débit de charge est nul, le débit de la deuxième partie étant réglable en fonction du niveau de la zone de séparation.

D'autres détails et particularités de l'invention ressortiront de la description donnée ci-après, à titre d'exemple non limitatif, avec référence aux dessins annexés, de quelques formes de réalisation particulières d'un procédé d'extraction de xénon et de krypton d'un gaz porteur suivant l'invention.

La figure 1 est une vue schématique en élévation d'une colonne de rectification continue pour la mise en œuvre du procédé d'extraction de xénon et de krypton d'un gaz porteur.

La figure 2 est une représentation schématique d'un système de régulation de la colonne de rectification montrée à la figure 1.

La figure 3 représente un graphique montrant la température de sublimation du xénon en fonction de sa pression partielle.

La figure 4 représente un tracé graphique du nombre de plateaux théoriques dans la zone d'enrichissement d'un mélange d'azote, d'argon et de krypton et d'un mélange d'azote et de krypton avec un taux de reflux égal à 1, dans ce graphique Y représentant la concentration molaire en phase gazeuse, et X représentant la concentration molaire en phase liquide.

La figure 5 représente un bloc-diagramme d'un circuit de purification d'effluents d'usines de retraitement de combustible nucléaire.

Dans les différentes figures, les mêmes chiffres de référence désignent des éléments analogues ou identiques.

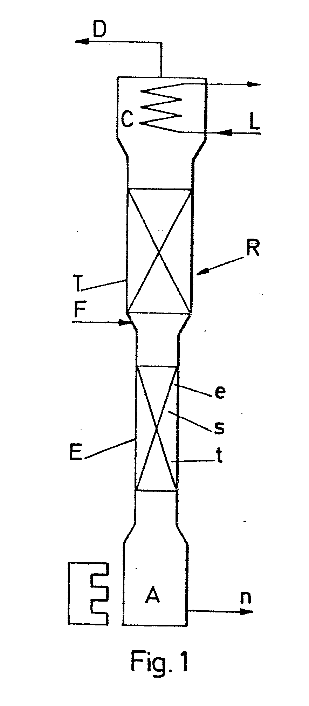

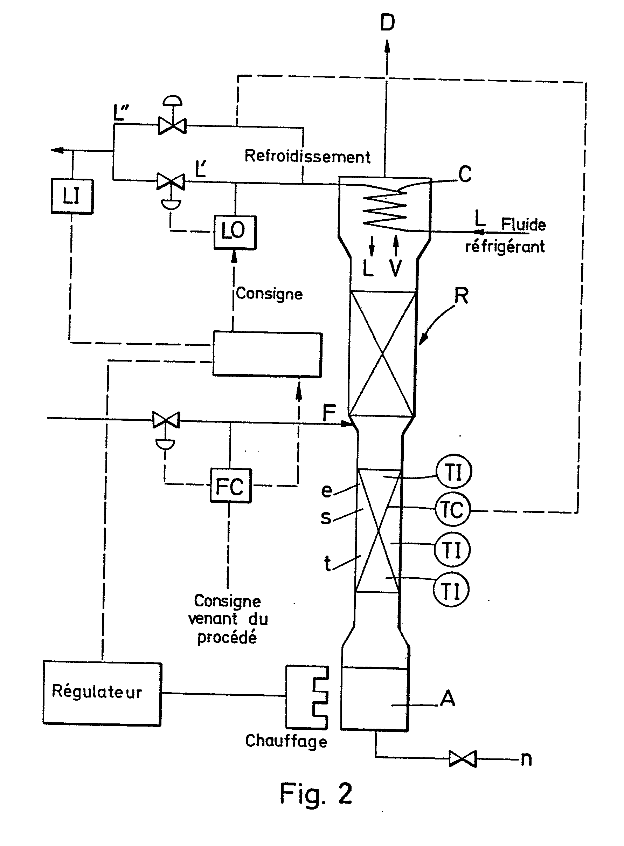

Suivant l'invention, la séparation du gaz porteur et du mélange krypton-xénon se fait dans une colonne de rectification continue R (figures 1 et 2) comportant à son fond une chaudière A chauffée électriquement ou par un fluide caloporteur dont le point de fusion est supérieur au point d'ébullition du mélange krypton-xénon, une tour T garnie de plateaux ou de garnissage permettant le barbotage adéquat de vapeurs montantes au travers de liquides descendants, un condenseur C au sommet de la colonne R refroidi de telle sorte qu'il provoque la condensation d'une fraction du gaz porteur ou un dispositif de distribution sous forme liquide d'une certaine quantité du composant le plus volatil du mélange constituant le gaz porteur.

La référence F indique l'endroit où est introduite la charge fraîche, constituée du mélange krypton-xénon et du gaz porteur, sous forme gazeuse.

De préférence, on utilise une colonne de rectification (R) dans laquelle on situe la zone de séparation susdite (s) à une distance où a lieu l'introduction (F) de la charge représentant de l'ordre de trois à six plateaux théoriques équivalents, et à une distance du bouilleur (A) de l'ordre de six à douze plateaux théoriques équivalents.

La zone située entre le niveau d'introduction de la charge et la chaudière ou bouilleur A constitue la zone d'enrichissement et a été indiquée par la référence E.

En régime de la colonne, la zone d'enrichissement E comporte une zone de séparation s de l'élément le plus volatil à extraire, qui est du krypton dans le cas du mélange de xénon et de krypton, et le composant le moins volatil du gaz porteur s'étendant sur un espace équivalent à une hauteur de plateau théorique. Une certaine hauteur de la zone d'enrichissement E, consistant en un nombre déterminé de plateaux théoriques équivalents, est utilisée en dessous de cette zone de séparation pour former une zone tampon t de l'élément le plus volatil à extraire, tel que le krypton, entre le xénon et le mélange porteur.

Enfin, une certaine hauteur de cette même zone d'enrichissement E est utilisée entre la zone de séparation s et le niveau où a lieu l'introduction de la charge F dans la colonne pour former une zone d'équilibre e entre les phases liquide et gazeuse.

La zone située au-dessus du niveau d'introduction de la charge F comporte un certain nombre de plateaux théoriques équivalents dépendant du degré de décontamination désiré du gaz porteur.

Suivant l'invention, on introduit la charge, sous forme gazeuse et à une température sensiblement constante légèrement supérieure à la température provoquant la désublimation d'un de ces composants à sa pression partielle nominale, à un niveau déterminé de la colonne susdite en maintenant dans cette dernière une pression sensiblement constante supérieure à 0,4 MPa, notamment à 0,5 à 1 MPa et de préférence de l'ordre de 0,8 MPa, et on contrôle dans cette colonne le niveau de la zone de séparation s en agissant sur le rapport momentané de la quantité de calories et de la quantité de frigories introduites dans la colonne respectivement dans la chaudière ou bouilleur A et le condenseur C, de manière à maintenir en permanence une zone tampon t en dessous de la zone de séparation s et une zone d'équilibre e au-dessus de cette zone de séparation s et en dessous du niveau de la colonne où a lieu l'introduction de la charge F. De plus, le débit de liquide descendant dans la zone d'enrichissement E est réglé en fonction de la pression dans la colonne, de manière à éviter la formation d'une phase solide dans cette zone d'enrichissement E.

La température de la charge F est de tout au plus 5°K supérieure à la température provoquant la désublimation d'un de ces composants à sa température nominale.

Pour atteindre cette température de la charge, celle-ci est pré-refroidie, par exemple par le fluide réfrigérant du condenseur C et/ou le gaz porteur purifié D quittant la colonne R, dans un échangeur de chaleur, non représenté aux figures et conçu de telle sorte qu'une désublimation excessive d'un ou de plusieurs des composants de la charge F ne s'y produise et que la température de cette dernière à l'entrée de la colonne soit maintenue constante.

Avantageusement, ceci peut par exemple être obtenu soit par une conception appropriée de l'échangeur avec possibilité de court-circuiter une partie des gaz refroidissants ou refroidis, soit en réchauffant légèrement les gaz froids, la puissance de ce réchauffement étant commandée par la température de la charge à l'entrée de la colonne.

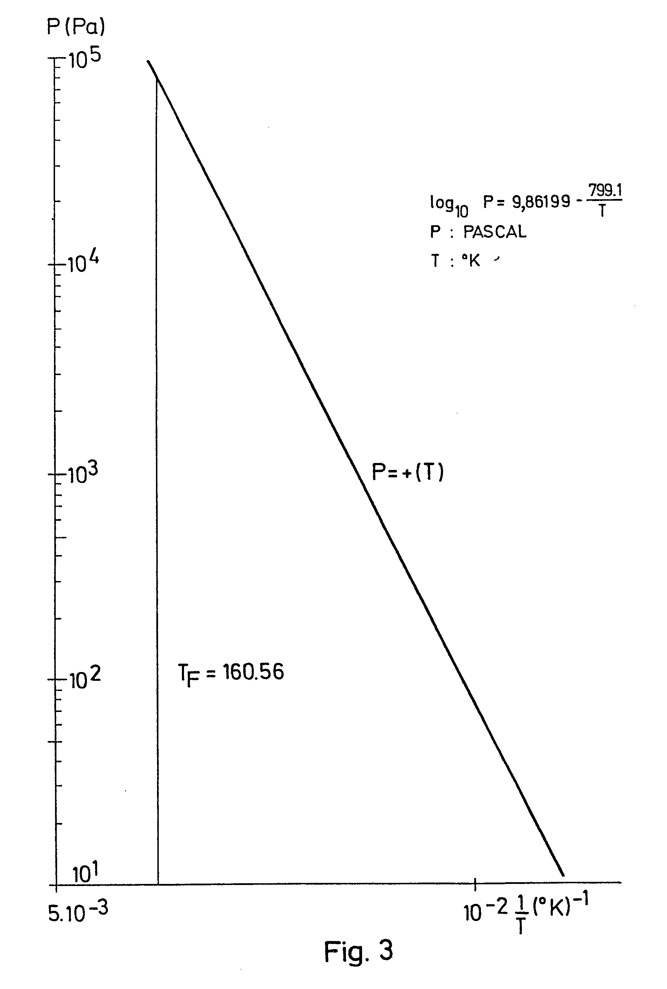

La température sera maintenue à une valeur dépendant de la concentration nominale en le produit le moins volatil. A cet égard, la figure 3 donne par exemple la température de sublimation du xénon en fonction de sa pression partielle (Réf. Freeman & Halsey – The solid solution Kr-Xe from 90°K to 120°K – The vapour pressure of A, Kr and Xe – J. Phys. Chem. 60, 1118–1126 (1956)).

Il y a encore lieu de noter que le système de refroidissement de la charge est conçu de telle sorte qu'il ne comporte pas de point froid à une température inférieure à la température de désublimation susdite.

Le chauffage de la chaudière ou du bouilleur A peut être d'une puissance constante permettant l'obtention, dans la zone d'enrichissement E, d'un débit gazeux compensé par un débit liquide tel que les concentrations de ces différents composants, particulièrement du xénon au voisinage du niveau d'introduction de la charge F, ne dépassent pas leur point de solubilité dans la phase liquide.

Par exemple, pour une charge F de 1 kmole/h $(278.10^{-6} \text{ s}^{-1})$ contenant $2.10^{-3}$ kmole/kmole en xénon et $0,1.10^{-3}$ kmole/kmole en krypton dans de l'azote, le débit doit être au moins supérieur à $6,6.10^{-3}$ kmole/heure pour éviter la formation d'un mélange solide d'Azote-Krypton-Xénon sous une pression de 0,8 MPa.

Cette valeur ne tient pas compte des imperfections techniques de la colonne et est à considérer comme un minimum absolu difficilement accessible.

Avantageusement, le contrôle de la zone de séparation s, qui constitue en fait la base de la régulation thermique de la colonne de rectification, a lieu par une détection de la température à un endroit déterminé de la zone d'enrichissement E.

Cette régulation est basée sur le fait que les différentes séparations krypton-azote, krypton-oxygène ou krypton-argon peuvent se faire sur un nombre limité de plateaux théoriques équivalents. Par exemple, on passe d'un mélange liquide argon-krypton à 95% en argon à un mélange à 25% en argon représentant une variation de température voisine de 35°K en l'espace de deux plateaux théoriques équivalents.

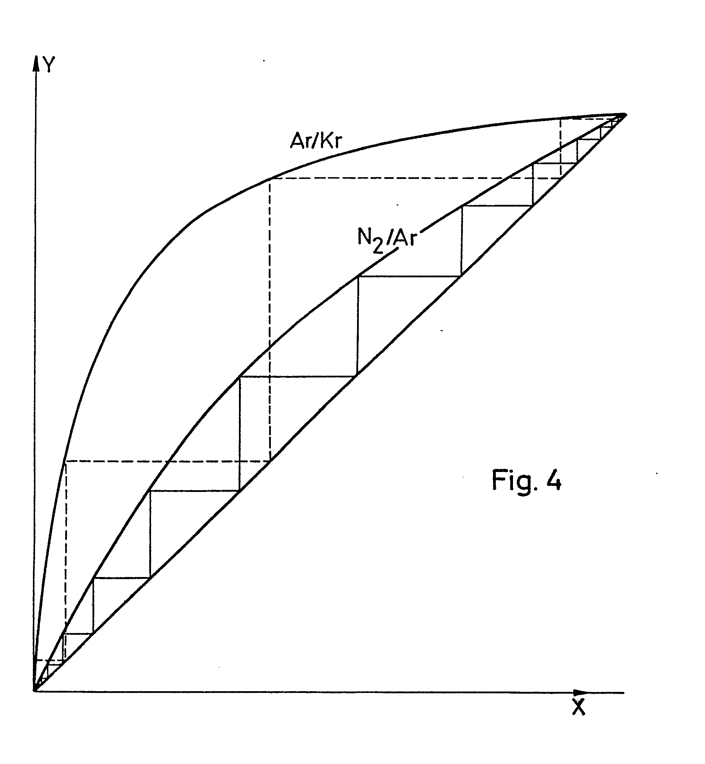

La figure 4 illustre ce phénomène pour un taux de reflux = 1 dans la partie d'enrichissement E de la colonne travaillant avec un mélange d'azote, d'argon et de krypton et avec un mélange d'azote et de krypton.

L'équation des courbes d'équilibre dans le diagramme d'équilibre liquide-vapeur de la figure 4 peut s'écrire comme suit:

$$\frac{y}{1-y} = \alpha \frac{x}{1-x}$$

$\alpha_{N_2/Ar} = 2,2 > N_{PT}$ de $y_N$ = 99% à 10%
　　　　　　　2　= 11 pour $N_2/Ar$
$\alpha_{Ar/Kr}$ + 12 → $N_{PT}$ de $y_{Ar}$ = 99% à 10%
　　　　　　　　　= 3 pour Ar/Kr

L'endroit de la zone de séparation s est déterminé par une sonde de température TC (voir figure 2) qui est choisie de telle sorte que l'enrichissement du liquide dans la zone plus basse de la colonne réponde aux exigences demandées de pureté du xénon et du krypton recueillis en n et que la zone située au-dessus de la zone de séparation s et indiquée par la référence e soit suffisamment importante pour permettre à la colonne de se mettre en équilibre avec la charge malgré les fluctuations dues à la régulation.

Ainsi, il a été constaté, suivant l'invention, que la partie de la zone d'enrichissement E située en dessous de la sonde représentant dix plateaux théoriques équivalents assure une concentration en gaz porteur inférieure à $10^{-12}$ mole/mole dans le liquide de la chaudière A et un nombre de cinq plateaux théoriques équivalents entre cette sonde TC et l'endroit de l'introduction de la charge F permet une conduite régulière et stable de la colonne de rectification.

On agit sur le rapport momentané de la quantité de calories et la quantité de frigories introduites dans la colonne en faisant varier le refroidissement au sommet de la colonne par le condenseur C. Ce refroidissement dépend de la température et de l'état physique de la charge F, du chauffage de la chaudière, des pertes thermiques de l'installation et de l'accumulation de krypton et de xénon dans la chaudière A.

La régulation du refroidissement de la colonne a été illustrée par la figure 2 et se fait en prévoyant un courant de fluide réfrigérant L, alimentant le condenseur C, constitué de deux parties L' et L''. Le débit de la première partie L' a un point de consigne LO variant linéairement avec le débit de gaz de la charge F et ayant une valeur légèrement inférieure à celle correspondant à la somme des pertes frigorifiques et de la puissance de chauffe du bouilleur lorsque le débit de charge est nul.

Le bilan thermique s'écrit:

$$L \left[\Delta H_L\right]_{P_L, Te, Liq}^{P_L, Te, Vap} = F \left[\Delta H_F\right]_{P_F, T_F}^{P_F, Te} + W + V$$

ΔH = variations d'enthalphie:
　　　Joules/kilo moles.
L　= Débit de liquide réfrigérant:
　　　kilo moles s$^{-1}$
F　= Débit de charge
　　　kilo moles s$^{-1}$
W　= Puissance de chauffe à la chaudière　Watts
V　= Pertes frigorifiques　Watts
P　= pression　Pa
T　= température　°K
indices L = liquide réfrigérant /e = ébullition
　　　　F = charge.

La deuxième partie L'' a un débit réglable en fonction du niveau de la zone de séparation s. Ainsi, grâce à cette deuxième partie L'' on peut réaliser une injection complémentaire de fluide réfrigérant dans le condenseur C lorsque, par insuffisance du débit de la partie L', la zone tampon de krypton t remonte dans la colonne au-dessus de la sonde TC.

En pratique, le courant de fluide réfrigérant est scindé en ces deux parties L' et L'' s'additionnant avant de pénétrer dans le condenseur C.

Le fractionnement du fluide réfrigérant peut avoir lieu avant de pénétrer dans le condenseur C ou après celui-ci comme montré à la figure 2.

Il faut de toute façon que ces deux parties L' et L'' passent dans le condenseur C, c'est-à-dire s'additionnent avant de pénétrer dans ce dernier.

La régulation thermique, suivant l'invention, permet de réaliser le contrôle massique en maintenant simplement la pression constante dans la colonne et égale à un point de consigne prédéterminé à la sortie de la colonne sans qu'il y ait un risque d'accumulation ou de dégagement non désiré.

Dans le procédé d'extraction, suivant l'invention, le méthane et l'oxygène s'accumulent au-dessus de la zone tampon de krypton E et sont évacués périodiquement en élevant momentanément cette zone tampon dans la zone d'enrichissement E jusqu'à une courte distance du niveau où a lieu l'introduction de la charge F. Ainsi ces gaz sont entraînés dans la partie supérieure de la colonne et évacués au sommet de celle-ci.

Cette façon de procéder permet de maintenir la quantité en méthane et oxygène dans la colonne à une faible valeur indépendante de la quantité de gaz noble concentré dans le bouilleur. Cette quantité d'oxygène et de méthane peut également être diminuée en choisissant un type de colonne à faible rétention de liquide.

Le krypton ou un mélange de krypton et de xénon recueilli dans le bouilleur A peut contenir jusqu'à moins de $10^{-12}$ mole/mole du gaz porteur, les concentrations nominales en krypton et en xénon dans le gaz porteur, c'est-à-dire dans la charge F, se situant respectivement en dessous de $1.10^{-2}$ et $2.10^{-3}$ mole/mole et le rapport des concentrations relatives en xénon par rapport au krypton couvrant la gamme de 0 à 50 mole/mole, tandis que les concentrations en krypton et xénon dans le gaz D quittant le sommet de la colonne peuvent être inférieures respectivement à $10^{-7}$ et $10^{-9}$ moles/moles, et ce sans enrichissement préalable en krypton de la charge F.

Le procédé d'extraction, suivant l'invention, s'applique avantageusement à la séparation du krypton, du xénon ou du krypton et xénon, d'air éventuellement enrichi au préalable en gaz rares suivie d'une séparation ultérieure de ces gaz rares.

Une autre application avantageuse est celle de la séparation du mélange krypton-xénon d'effluents gazeux d'usines de retraitement de combustibles nucléaires ou de réacteurs nucléaires, afin d'isoler l'isotope 85 radioactif du krypton de ces effluents, suivie éventuellement d'une séparation krypton-xénon permettant la réduction du volume de gaz radioactifs à stocker et éventuellement la production de xénon en partant d'un gaz porteur dans lequel sa concentration est de l'ordre 10 000 fois la concentration naturelle dans l'air.

Comme avantage essentiel du procédé d'extraction basé sur le contrôle thermique suivant l'invention de la colonne de distillation, on peut citer la diminution de la puissance de refroidissement du condenseur C et une sécurité dans la conduite de la colonne de rectification.

En effet, par le fait que la régulation maintient la zone tampon ou le front de krypton dans la zone d'enrichissement E de la colonne, aucun composant de la charge de volatilité supérieure à celle du krypton ne s'accumule dans la chaudière. Il n'y a donc pas de besoin en frigories servant à condenser une partie de la charge dans la chaudière et ce sans rendre le contrôle de la colonne plus difficile.

Du point de vue sécurité, il y a lieu de noter que la conduite de la colonne de distillation, suivant l'invention, permet d'éviter une accumulation dans la chaudière A de produits tels que du méthane et de l'oxygène, d'une volatilité supérieure à celle du krypton et pouvant présenter des dangers d'explosion.

Comme déjà signalé ci-dessus, surtout l'oxygène est particulièrement dangereux en présence de l'isotope 85 du krypton.

Comme déjà signalé également ci-dessus, ce procédé d'extraction du xénon et du krypton d'un gaz porteur peut être avantageusement intégré dans un procédé de purification d'effluents de réacteurs nucléaires ou d'usines de retraitements nucléaires, avec séparation ultérieure du krypton actif et du xénon en vue de stocker le premier comme déchet ou de le commercialiser comme produit radioactif et de commercialiser le second comme produit non actif.

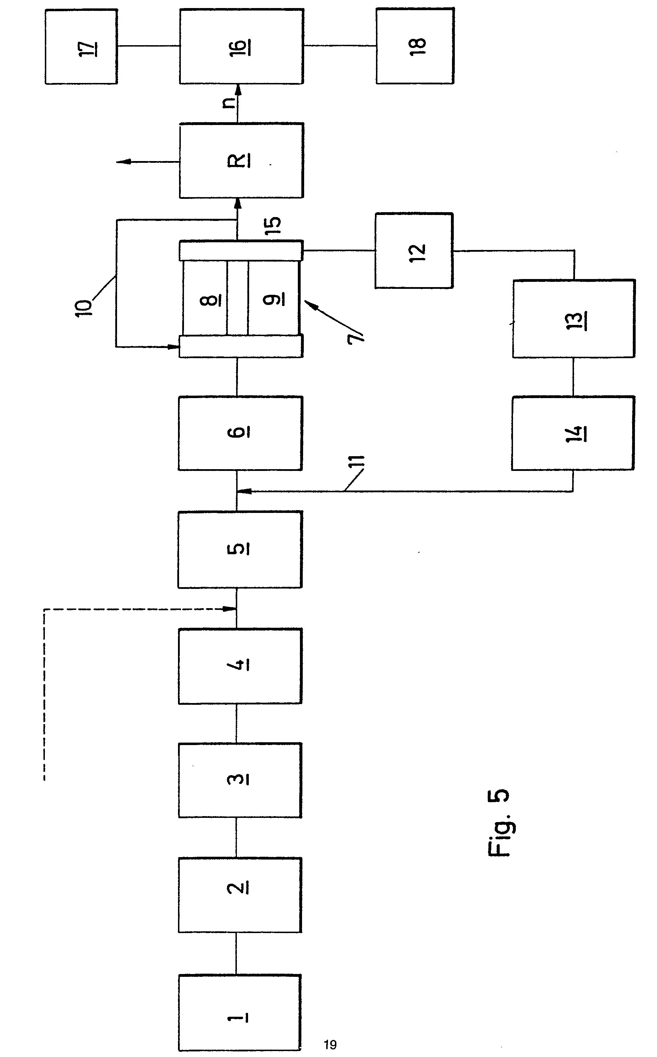

La figure 5 représente un bloc-diagramme d'un tel circuit de purification d'effluents d'usines de retraitement.

Du combustible est dissous dans un dissolveur 1, libérant des oxydes d'azote, des composés iodés, du xénon, du krypton, des produits semi-volatils, tels que le tétra-oxyde de ruthénium, etc., le tout entraîné par un gaz porteur, principalement de l'air.

Dans le schéma proposé, une partie des vapeurs nitreuses sont lavées par de l'eau ou de l'acide nitrique dilué dans une colonne de lavage 2, afin de récupérer une partie de l'acide nitrique.

Une partie de l'iode est retenue dans un dispositif 3, qui est soit une deuxième colonne de lavage utilisant une solution acide de nitrate mercurique ou de l'acide nitrique concentré à chaud, soit une colonne d'adsorption comprenant un lit de sorbant tel que tamis moléculaire échangé à l'argent ou un support catalytique imprégné en un sel d'argent. Le facteur de décontamination à ce niveau est de l'ordre de $10^3$.

Les particules semi-volatiles sont arrêtées par adsorption physique ou chimique sur un lit fixe 4 constitué par exemple de gel de silice ou d'un mélange de gel de silice et d'oxyde terreux.

L'iode résiduel est alors arrêté par adsorption chimique sur un lit argenté 5 réalisant un facteur de décontamination complémentaire de l'ordre de $10^3$ à $10^4$.

Après une compression éventuelle des effluents, des hydrocarbures, des composés d'azote résiduels et de l'oxygène sont enlevés sur un dispositif constitué d'une succession de lits catalytiques ou d'un lit formé de couches successives de catalyseurs différents ou encore formé d'un mélange de catalyseurs. Par exemple, les hydrocarbures sont transformés en eau et en dioxyde de carbone. Les oxydes d'azote forment de l'azote et de l'eau, par réaction avec de l'hydrogène ou de l'ammoniac, et l'oxygène forme de l'eau par réaction avec de l'hydrogène.

A la sortie de ce dispositif 6, les teneurs résiduelles en hydrocarbure, oxyde d'azote, oxygène et éventuellement en ammoniac sont de l'ordre de ou inférieures à $10^{-6}$ mole/mole de gaz sortant.

Les effluents sont ensuite comprimés à une pression de l'ordre de 1 MPa et passent à travers une unité d'adsorption ou de séchage 7 où l'eau, le dioxyde de carbone et les traces éventuelles d'ammoniac et d'oxyde d'azote sont adsorbés sur des tamis moléculaires.

Une partie de l'effluent ayant passé par une unité 8 du dispositif d'adsorption 7 passe ensuite à travers l'autre unité 9 pour la régénérer, comme indiqué par la flèche 10.

La partie de l'effluent ayant servi à cette régénération est recyclée en amont du dispositif 6 servant à l'élimination des hydrocarbures et produits azotés, comme indiqué par la flèche 11, après avoir traversé un refroidisseur 12, destiné à condenser la majeure partie de l'eau qu'elle contient, et dans un dispositif d'élimination de dioxyde de carbone 13 et d'un dispositif d'élimination de l'ammoniac ou des oxydes d'azote résiduels 14.

L'effluent est séché dans le dispositif 7 jusqu'à un point de rosée inférieur à 190°K, tandis que la régénération se fait à une température de l'ordre de 200°C et à une pression inférieure à la pression d'adsorption.

Cette façon de procéder présente le grand avantage d'éviter tout risque de relâcher dans l'atmosphère du krypton éventuellement coadsorbé avec la vapeur d'eau dans un dispositif 7 sans pour autant nécessiter un système complexe utilisant le caractère chromatographique de l'adsorption sur le tamis moléculaire.

Le dispositif d'arrêt de dioxyde de carbone 13 est par exemple constitué d'une colonne de lavage à hydroxyde de calcium ou de sodium, puisque, de par le recyclage répété du dioxyde de carbone, une décontamination élevée n'est pas nécessaire.

On pourrait également prévoir un lit fixe d'hydroxyde de calcium ou tout autre produit adéquat.

Le dispositif d'élimination de l'ammoniac et des oxydes d'azote peut par exemple comprendre un lit de mordénite sous forme hydrogénée permettant l'élimination complète indifféremment de cet ammoniac ou oxydes d'azote désorbés par addition d'une fraction des effluents contenant encore de l'oxygène.

Le flux principal sortant du dispositif d'adsorption 7 pénètre alors, comme indiqué par la flèche 15, dans la colonne de rectification R décrite ci-dessus et montrée déjà aux figures 1 et 2. Ce flux forme donc la charge F de cette dernière.

Le gaz porteur débarrassé du krypton et du xénon constitue le distillat D. Le mélange de xénon et de krypton, recueilli dans le bouilleur A, constitue la fraction lourde n qui est envoyée vers une colonne de distillation discontinue 16 travaillant à une pression plus basse que la colonne R.

A cet égard, une pression de 0,25 MPa est suffisante pour éviter une phase solide du mélange krypton-xénon. Ainsi, le transfert de la colonne R vers la colonne 16 peut se faire par dépression.

La pureté du krypton récolté au condenseur 17 de la colonne 16 ne doit pas nécessairement être très élevée, sauf s'il est destiné à des applications particulières telles que les applications médicales.

Par contre, le xénon, récolté au bouilleur 18 de la colonne 16, ne peut contenir que d'infimes traces de krypton radioactif.

La volatilité relative du krypton par rapport au xénon étant voisine de 12 sous une pression de 0,2 MPa, on trouve, en utilisant la méthode de Mc.Cabe et Thiele à une colonne de rectification discontinue, qu'on peut obtenir du xénon liquide dans le bouilleur de la colonne 16 à moins de $10^{-3}$ mole de krypton/mole de xénon et du krypton gazeux au sommet de cette colonne 16 à $1.10^{-3}$ mole de xénon/ mole de krypton avec une colonne de 7 plateaux théoriques équivalents sous un taux de reflux de 100.

De même, on obtient du xénon liquide $1.10^{-8}$ mole de krypton/mole de xénon dans le bouilleur de la colonne 16 et du krypton à $1.10^{-8}$ mole de xénon/mole de krypton au condenseur de celle-ci en 9 plateaux théoriques équivalents sous un taux de reflux de $10^3$.

Le contrôle ou la détection de la zone de séparation s ou de la zone tampon de krypton t peut se faire par tout autre moyen, tel qu'un détecteur de rayons gamma.

Par ailleurs, le gaz porteur peut être de n'importe quelle nature permettant l'application de la régulation thermique suivant l'invention.

Dans certains cas, pour agir sur le rapport momentané de la quantité de calories introduites dans la colonne, on peut par exemple réduire le chauffage dans le bouilleur A.

## Revendications

1. Procédé d'extraction de xénon et/ou de krypton d'un gaz porteur, notamment d'un gaz porteur comprenant essentiellement de l'azote ou un mélange d'azote avec de l'oxygène et/ou de l'argon, par distillation cryogénique dans une colonne de rectification (R) comportant à son fond un bouilleur (A) chauffé et à son sommet un condenseur (C) alimenté par un fluide réfrigérant, selon lequel on introduit une charge (F), formée de xénon et/ou de krypton et d'un gaz porteur sous forme gazeuse et à une température supérieure à la température provoquant la désublimation d'un de ses composants à sa pression partielle nominale, à un niveau déterminé de la colonne susdite, dans laquelle on maintient la pression à une valeur sensiblement constante supérieure à 0,4 MPa, et on contrôle la quantité de calories et la quantité de frigories introduites dans la colonne, caractérisée en ce qu'on introduit ladite charge (F), dont la concentration en krypton et en xénon dans le gaz porteur est inférieure respectivement à $1.10^{-2}$ et $2.10^{-3}$ mole/mole de gaz porteur et dans laquelle les concentrations relatives en xénon par rapport au krypton sont comprises dans la gamme de 0 à 50 mole/mole de gaz porteur, dans la colonne (R) à une température sensiblement constante de tout au plus 5°K supérieure à la température provoquant la désublimation d'un de ses composants à sa pression partielle nominale et à ce qu'on contrôle dans cette colonne le niveau de la zone de séparation (s) de l'élément le plus volatil à extraire, tel que le krypton, et du composant le moins volatil du gaz porteur en agissant sur le rapport momentané de la quantité de calories et de la quantité de frigories introduites dans la colonne, de manière à maintenir cette zone de séparation (s), d'une part, au-dessus d'une zone tampon (t) de l'élément le plus volatil à extraire, tel que le krypton, et, d'autre part, en dessous d'une zone d'équilibre (e) entre les phases liquide et gazeuse située elle-même en dessous du niveau de la colonne où a lieu l'introduction de la charge susdite, le débit de liquide descendant dans la zone située en dessous de ce niveau, appelée zone d'enrichissement (E), comprenant les zones d'équilibre (e), de séparation (s) et tampon (t), étant réglé en fonction de la pression de la colonne, de manière à éviter la formation d'une phase solide dans cette zone d'enrichissement (E), le niveau de la charge (F) étant réglé en fonction de la pression de la colonne, d'une manière connue en soi, en vue d'éviter la formation d'une phase solide dans cette zone d'enrichissement.

2. Procédé suivant la revendication 1, caractérisé en ce qu'on maintient la pression dans la colonne (R) à une valeur comprise entre 0,5 et 1 MPa, et de préférence de l'ordre de 0,8 MPa.

3. Procédé suivant l'une ou l'autre des revendications 1 et 2, caractérisé en ce que la charge est refroidie, à la température susdite de tout au plus 5°K supérieure à la température provoquant la désublimation d'un de ses composants à sa pression partielle, par du fluide réfrigérant formé par du gaz porteur purifié recueilli au haut de la colonne de rectification (R) et/ou du fluide servant à condenser une partie du gaz porteur purifié au haut de celle-ci.

4. Procédé suivant l'une quelconque des revendications 1 à 3, caractérisé en ce qu'on chauffe le liquide recueilli au bas (A) de la colonne (R) de manière à permettre l'obtention, dans la zone d'enrichissement (E), un débit gazeux compensé par un débit liquide tel que les concentrations de différents composants de la phase gazeuse, particulièrement du xénon au voisinage de l'endroit (F) de l'introduction de la charge dans la colonne, ne dépassent pas leur point de solubilité dans la phase liquide.

5. Procédé suivant l'une quelconque des revendications 1 à 4, caractérisé en ce qu'on contrôle la zone de séparation susdite (s) par une détection de la température à un endroit déterminé (TC) de la zone d'enrichissement (E).

6. Procédé suivant l'une quelconque des revendications 1 à 5, caractérisé en ce qu'on agit sur le rapport momentané de la quantité de calories et de la quantité de frigories introduites dans la colonne en faisant varier le refroidissement au sommet de la colonne (R).

7. Procédé suivant la revendication 6, caractérisé en ce qu'on agit sur le refroidissement de la colonne (R) en prévoyant un courant de fluide réfrigérant (L), assurant le refroidissement au sommet de la colonne, constitué de deux parties (L') et (L''), le débit de la première partie (L') ayant un point de consigne qui varie linéairement avec le débit de la charge (F) et qui a une valeur légèrement inférieure à celle correspondant à la somme des pertes frigorifiques et de la puissance de chauffe au bouilleur de la colonne lorsque le débit de charge est nul, le débit de la deuxième partie (L'') étant réglable en fonction du niveau de la zone de séparation (s) ou de la zone de tampon (t).

8. Procédé suivant l'une quelconque des revendications 1 à 7, caractérisé en ce qu'on utilise une colonne de rectification (R) dans laquelle on situe la zone de séparation susdite (s) à une distance où a lieu l'introduction (F) de la charge représentant de l'ordre de trois à six plateaux théoriques équivalents, et à une distance du bouilleur (A) de l'ordre de six à douze plateaux théoriques équivalents.

9. Procédé suivant la revendication 8, caractérisé en ce qu'on situe la zone de séparation (s) à une distance du niveau où a lieu l'introduction de la charge représentant de l'ordre de cinq plateaux théoriques équivalents et à une distance du bouilleur (A) de l'ordre de dix plateaux théoriques équivalents.

10. Procédé suivant l'une quelconque des revendications 1 à 9, caractérisé en ce qu'on règle périodiquement le rapport momentané de la quantité de calories et de la quantité de frigories introduites de la colonne de manière à élever momentanément la zone tampon (t) jusqu'a proximité du niveau où a lieu l'introduction de la charge dans la colonne.

11. Procédé suivant l'une quelconque des revendications 1 à 10, caractérisé en ce qu'on réduit les concentrations en krypton et xénon dans le gaz porteur quittant le sommet de la colonne en dessous de respectivement $10^{-7}$ et $10^{-9}$ mole/mole du gaz porteur.

12. Procédé suivant l'une quelconque des revendications 1 à 11, caractérisé en ce qu'on extrait du krypton ou un mélange de krypton et xénon contenant moins de $10^{-12}$ mole/mole du gaz porteur.

13. Procédé suivant l'une quelconque des revendications 1 à 12, caractérisé en ce qu'on utilise comme charge un effluent gazeux provenant d'un retraitement de combustible nucléaire ou de réacteurs nucléaires afin de séparer l'isotope 85 radioactif du krypton de l'effluent et en ce qu'on fait suivre éventuellement cette séparation par une séparation krypton-xénon.

14. Procédé suivant la revendication 13, caractérisé en ce qu'on soumet l'effluent gazeux susdit à un traitement comprenant le lavage de vapeurs nitreuses, la séparation d'iode et de produits semi-volatils, l'élimination d'hydrocarbures, de composés d'azote résiduels et d'oxygène, l'adsorption d'eau, de dioxyde de carbone et éventuellement de traces d'ammoniac et d'oxydes d'azote en faisant passer l'effluent à travers une unité d'adsorption (7) pendant qu'une autre unité (9) est régénérée par une partie de l'effluent ayant subi le traitement d'adsorption, cette partie étant recyclé en amont de l'élimination d'hydrocarbures, de composés d'azote résiduels et d'oxygène, après condensation de l'eau y contenue.

15. Procédé suivant la revendication 14, caractérisé en ce qu'on sèche les effluents au cours du traitement d'adsorption susdit jusqu'à un point de rosée inférieur à 190°K, après avoir été comprimés à une pression de l'ordre de 1 MPa, et en ce qu'on effectue la régénération à une température de l'ordre de 200 °C et à une pression inférieure à la pression d'adsorption.

**Claims**

1. Method for extracting xenon and/or krypton from a carrier gas, notably a carrier gas comprising essentially nitrogen or a mixture of nitrogen with oxygen and/or argon, by cryogenic distillation in a rectifying column (R) comprising at the bottom thereof a heated evaporator (A) and at the top thereof a condenser (C) which is fed with a refrigerating fluid, according to which one feeds a load (F) formed by xenon and/or krypton and a carrier gas in gaseous form and at a temperature higher than that temperature causing unsublimating of the one component thereof under the nominal partial pressure thereof, at a defined level of said column, inside which the pressure is retained at a substantially constant value higher than 0.4 MPa, and the calorie amount and cold calorie amount fed to the column are controlled, characterized in that said load (F) is fed, the krypton and xenon concentration of which in the carrier gas is lower than $1.10^{-2}$ and $2.10^{-3}$ mole/mole carrier gas, respectively, and in which the relative concentrations of xenon relative to krypton lie in the range from 0 to 50 mole/mole carrier gas, in column (R) at a substantially constant temperature which is at the most higher by 5°K than that temperature causing unsublimating of the one component thereof at the nominal partial pressure thereof, and one controls inside said column, the level of the separation area for the most volatile element to be extracted, such as krypton, and the less volatile component of the carrier gas, by acting on the momentary ratio of the calorie amount and cold calorie amount fed to the column, in such a way as to retain said separation area on the one hand above a buffer area for the most volatile element to be extracted, such as krypton, and on the other hand below a balance area between the liquid and gaseous phases lying in turn below that column level where feeding said load occurs, the liquid flow down into the area lying below said level, the so-called enrichment area (E), comprising the balance (e), separation (s) and buffer (t) areas, being adjusted as a function of the column pressure, so as to prevent forming a solid phase in said enrichment area (E), the level of the load (F) being adjusted as a function of the column pressure in a way known per se, with a view to preventing the formation of a solid phase in said enrichment area.

2. Method according to claim 1, caracterized in that one retains the pressure inside the column (R) to a value comprised between 0.5 and 1 MPa, and preferably in the range of 0.8 MPa.

3. Method according to either one of claims 1 and 2, characterized in that the load is cooled to said temperature at the most higher by 5°K than that temperature causing unsublimating of the one component thereof at the partial pressure thereof, with refrigerating fluid formed by purified carrier gas collected at the top of the rectifying column (R), and/or fluid used to condense part of the carrier gas being purified at the top thereof.

4. Method according to any one of claims 1 to 3, characterized in that one heats the liquid collected at the bottom (A) of the column (R), in such a way as to allow obtaining in the enrichment area (E), a gas flow balanced by such a liquid flow that the concentrations of various components of the gas phase, particularly xenon adjacent to the location (F) for feeding the load to the column, do not rise above the solubility point thereof in the liquid phase.

5. Method according to any one of claims 1 to 4, characterized in that one controls said separation area (s) by a temperature sensing in a determined location (TC) of the enrichment area (E).

6. Method according to any one of claims 1 to 5, characterized in that one acts on the momentary ratio of the calorie amount and cold calorie amount fed to the column, by varying the cooling at the top of the column (R).

7. Method according to claim 6, characterized in that one acts on the cooling of the column (R) by providing a stream of refrigerating fluid (L) insuring the cooling at the column top, comprised of two parts (L') and (L''), the flow rate in the first part (L') having an order point which varies linearly with the flow rate of the load (F) and which has a value slightly lower than the one corresponding to the sum of the freezing losses and the heating power at the column evaporator when the load flow rate is zero, the flow rate of the second part (L'') being adjustable as a function of the level in the separation area (s) or the buffer area (t).

8. Method according to any one of claims 1 to 7, characterized in that one uses a rectifying column (R) in which one locates said separation area (s) at a distance where the feeding (F) of the load occurs corresponding to about three to six equivalent theoretical trays, and at a distance from the evaporator (A) in the range from six to twelve equivalent theoretical trays.

9. Method according to claim 8, characterized in that one locates the separation area (s) at a distance from the level where the load feeding occurs corresponding to about five equivalent theoretical trays, and at a distance from the evaporator (A) in the range of ten equivalent theoretical trays.

10. Method according to any one of claims 1 to 9, characterized in that one periodically adjusts the momentary ratio of the calorie amount and the cold calorie amount fed to the column in such a way as to raise momentarily the buffer area (t) up to adjacent the level where the feeding of the load to the column occurs.

11. Method according to any one of claims 1 to 10, characterized in that one lowers the krypton and xenon concentrations in the carrier gas leaving the column top, respectively below $10^{-7}$ and $10^{-9}$ mole/mole carrier gas.

12. Method according to any one of claims 1 to 11, characterized in that one extracts krypton or a mixture of krypton and xenon which contains less than $10^{-12}$ mole/mole carrier gas.

13. Method according to any one of claims 1 to 12, characterized in that one uses as load, a gas effluent from a back-treatment of nuclear fuel or nuclear reactors, so as to separate the radioactive 85-isotope of krypton from the effluent, and in that one possibly follows this separation with a krypton-xenon separation.

14. Method according to claim 13, characterized in that one subjects said gas effluent to a treatment which comprises the washing of nitrogen vapours, the separation of iodine and semi-volatile products, the removing of hydrocarbons, residual nitrogen compounds and oxygen, the adsorption of water, carbon dioxide and possibly traces of ammonia and nitrogen oxides by passing the effluent through an adsorption unit (7) while another unit (9) is being regenerated by part of the effluent having undergone the adsorption treatment, said part being cycled back upstream of the removing of hydrocarbons, residual nitrogen compounds and oxygen, after condensing the water contained therein.

15. Method according to claim 14, characterized in that one dries the effluents during said adsorption treatment up to a dew point lower than 190°K, after having been compressed under a pressure in the range of 1 MPa, and in that one performs the regenerating at a temperature in the range of 200 °C and under a pressure lower than the adsorption pressure.

## Patentansprüche

1. Verfahren zur Extraktion von Xenon und/oder Krypton aus einem Trägergas, insbesondere aus einem Trägergas, das im wesentlichen Stickstoff oder eine Mischung von Stickstoff und Sauerstoff und/oder Argon enthält, durch kryogene Destillation in einer Rektifizierkolonne (R) mit einem unten angeordneten, beheizten Siedekessel (A) und einem oben angeordneten, von einem Kühlmedium gespeisten Kondensator (C), wobei man eine gasförmige Charge (F) aus Xenon und/oder Krypton in einem Trägergas bei einer Temperatur, die höher als die eine Desublimation einer ihrer Bestandteile bei dessen nominellem Partialdruck hervorrufende Temperatur ist, an einem bestimmten Niveau der Kolonne einführt, in der Kolonne den Druck bei einem im wesentlichen konstanten Wert oberhalb 0,4 MPa hält und die Menge der in die Kolonne eingeführten Kalorien und Frigorien überwacht, dadurch gekennzeichnet, dass man die Charge (F), deren Konzentration an Krypton und an Xenon im Trägergas kleiner als $1.10^{-2}$ bzw. $2.10^{-3}$ Mol/Mol Trägergas ist und in der die relativen Konzentrationen an Xenon bezüglich Krypton im Bereich von 0 bis 50 Mol/Mol Trägergas liegen, in die Kolonne (R) bei einer im wesentlichen konstanten Temperatur einführt, die höchstens 5°K über der eine Desublimation einer ihrer Bestandteile bei dessen nominellem Partialdruck hervorrufende Temperatur liegt, und dass man in der Kolonne das Niveau der Trennzone (s) des flüchtigsten, zu extrahierenden Elements, beispielsweise Krypton, und des am wenigsten flüchtigen Bestandteils des Trägergases überwacht, indem man auf das momentane Mengenverhältnis der in die Kolonne eingeführten Kalorien und Frigorien derart einwirkt, dass die Trennzone (s) einerseits oberhalb einer Pufferzone (t) des flüchtigsten, zu extrahierenden Elements, z.B. Krypton, und andererseits unterhalb einer Gleichgewichtszone (e) zwischen dem flüssigen und gasförmigen Phasen gehalten bleibt, die ihrerseits unter dem Niveau der Säule liegt, wo die Einführung der Charge stattfindet, wobei man die Menge an Flüssigkeit, die in die unter diesem Niveau gelegene, Anreicherungszone (E) genannte und die Gleichgewichtszonen (e), die Trennzone (s) und die Pufferzone (t) umfassende Zone hinabgelangt, in Abhängigkeit vom Druck der Kolonne in der Weise reguliert, dass die Bildung einer festen Phase in der Anreicherungszone (E) vermieden wird, und wobei man das Niveau der Charge (F) in an sich bekannter Weise in Abhängigkeit vom Druck der Kolonne im Hinblick darauf reguliert, dass die Bildung einer festen Phase in der Anreicherungszone (E) vermieden wird.

2. Verfahren nach Anspruch 1, dadurch gekennzeichnet, dass man den Druck in der Kolonne (R) bei einem Wert zwischen 0,5 und 1 MPa, vorzugsweise in der Grössenordnung von 0,8 MPa hält.

3. Verfahren nach Anspruch 1 oder 2, dadurch gekennzeichnet, dass die Charge auf die Temperatur, welche höchstens 5°K über der eine Desublimation einer ihrer Bestandteile bei dessen nominellem Partialdruck hervorrufenden Temperatur liegt, durch ein Kühlmedium abgekühlt wird, welches aus dem gereinigten, und im oberen Bereich der Rektifizierkolonne (R) wiedergewonnenen Trägergas und/oder aus dem Medium besteht, welches dazu dient, einen Teil des gereinigten Trägergases im oberen Bereich der Kolonne zu kondensieren.

4. Verfahren nach einem der Ansprüche 1 bis 3, dadurch gekennzeichnet, dass man die im unteren Bereich (A) der Kolonne (R) anfallende Flüssigkeit in der Weise erwärmt, dass in der Anreicherungszone (E) die Darstellung einer Gasmenge gestattet ist, die durch eine solche Flüssigkeitsmenge kompensiert ist, dass die Konzentrationen verschiedener Bestandteile der gasförmigen Phase, insbesondere Xenon, in der Nähe der Einführungsstelle (F) der Charge in die Kolonne ihren Löslichkeitspunkt in der flüssigen Phase nicht überschreiten.

5. Verfahren nach einem der Ansprüche 1 bis 4, dadurch gekennzeichnet, dass man die Trennzone (s) durch Feststellung der Temperatur an einer bestimmten Stelle (TC) der Anreicherungszone (E) überwacht.

6. Verfahren nach einem der Ansprüche 1 bis 5, dadurch gekennzeichnet, dass man auf das momentane Mengenverhältnis der in die Kolonne eingeführten Kalorien und Frigorien einwirkt, indem man die Abkühlung im oberen Bereich der Kolonne (R) variieren lässt.

7. Verfahren nach Anspruch 6, dadurch gekennzeichnet, dass man auf die Abkühlung der Kolonne (R) einwirkt, indem man einen Strom an Kühlmedium (L) vorsieht, der die Abkühlung im oberen Bereich der Kolonne gewährleistet und aus zwei Teilen (L') und (L'') besteht, wobei die Ergiebigkeit des ersten Teils (L') einen Einstellpunkt hat, der linear mit der Ergiebigkeit der Charge (F) variiert und bei einem Wert leicht unterhalb demjenigen liegt, welcher der Summe der Kühlverluste und der Heiz- oder Siedeleistung der Kolonne entspricht, wenn die Ergiebigkeit der Charge Null ist, und wobei die Ergiebigkeit des zweiten Teils (L'') in Abhängigkeit vom Niveau der Trennzone (s) oder der Pufferzone (t) regulierbar ist.

8. Verfahren nach einem der Ansprüche 1 bis 7, dadurch gekennzeichnet, dass man eine Rektifizierkolonne (R) verwendet, in welcher man die Trennzone (s) in einer Entfernung vom Ort der Einführung (F) der Charge anbringt, welche der Grössenordnung nach drei bis sieben theoretische Plattenäquivalente repräsentiert, wobei die Entfernung der Trennzone (s) vom Siedekessel (A) der Grössenordnung nach sechs bis zwölf theoretische Plattenäquivalente beträgt.

9. Verfahren nach Anspruch 8, dadurch gekennzeichnet, dass man die Trennzone (s) in einer Entfernung vom Niveau der Chargeneinführung anbringt, welche der Grössenordnung nach fünf theoretische Plattenäquivalente darstellt, wobei die Entfernung der Trennzone vom Siedekessel (A) in der Grössenordnung von zehn theoretischen Plattenäquivalenten liegt.

10. Verfahren nach einem der Ansprüche 1 bis 9, dadurch gekennzeichnet, dass man das momentane Mengenverhältnis der in die Kolonne eingeführten Kalorien und Frigorien in der Weise reguliert, dass die Pufferzone momentan bis in die Nähe desjenigen Niveaus angehoben wird, bei dem die Einführung der Charge in die Kolonne stattfindet.

11. Verfahren nach einem der Ansprüche 1 bis 10, dadurch gekennzeichnet, dass man die Konzentrationen an Krypton und Xenon im Trägergas, welches den oberen Bereich der Kolonne verlässt, bis unterhalb $10^{-7}$ bzw. $10^{-9}$ Mol/Mol Trägergas reduziert.

12. Verfahren nach einem der Ansprüche 1 bis 11, dadurch gekennzeichnet, dass man Krypton oder eine Mischung aus Krypton und Xenon extrahiert, die weniger als $10^{-12}$ Mol/Mol Trägergas enthält.

13. Verfahren nach einem der Ansprüche 1 bis 12, dadurch gekennzeichnet, dass man als Charge ein Abgas verwendet, welches aus einer Wiederaufbereitung von Kernbrennstoff oder Kernreaktoren stammt, um das radioaktive Isotop 85 von Krypton aus dem Abgas abzutrennen, und dass man an diese Abtrennung gegebenenfalls eine Trennung Krypton-Xenon anschliesst.

14. Verfahren nach Anspruch 13, dadurch gekennzeichnet, dass man das Abgas einer Behandlung mit folgenden Schritten unterwirft: Auswaschung stickstoffhaltiger Dämpfe, Abtrennung von Jod und halbflüchtigen Produkten, Eliminierung von Kohlenwasserstoffen, Reststickstoff- und Sauerstoffverbindungen, Adsorption von Wasser, Kohlendioxid und gegebenenfalls Spuren von Ammoniak und Stickoxiden, indem man das Abgas durch eine Adsorptionseinheit (7) leitet, während eine andere Einheit (9) durch einen Teil des Abgases regeneriert wird, der die Adsorptionsbehandlung bereits erfahren hat, wobei dieser Teil nach Kondensierung des in ihm enthaltenen Wassers stromauf hinter die Eliminierung der Kohlenwasserstoffe und der Reststickstoff- und Sauerstoffverbindungen rezirkuliert wird.

15. Verfahren nach Anspruch 14, dadurch gekennzeichnet, dass man die Abgase im Verlauf der Adsorptionsbehandlung bis zu einem Taupunkt unterhalb 190°K trocknet, nachdem sie einem Druck in der Grössenordnung von 1 MPa unterworfen wurden, und dass man die Regenerierung bei einer Temperatur in der Grössenordnung von 200 °C und bei einem Druck unterhalb dem Adsorptionsdruck vollzieht.

Fig. 1

Fig. 2

Fig. 3

Fig. 4

Fig. 5